# Europäisches Patentamt
## European Patent Office
## Office européen des brevets

(11) Veröffentlichungsnummer: **0 316 315**
**B1**

(12) **EUROPÄISCHE PATENTSCHRIFT**

(45) Veröffentlichungstag der Patentschrift: **13.06.90**

(21) Anmeldenummer: **87904531.8**

(22) Anmeldetag: **17.07.87**

(86) Internationale Anmeldenummer:
**PCT/EP87/00388**

(87) Internationale Veröffentlichungsnummer:
**WO 88/00675 28.01.88 Gazette 88/03**

(51) Int. Cl.[5]: **F 24 H 1/10,** F 25 B 21/02,
F 28 F 13/12

(54) **TEMPERIERGERÄT FÜR FLIESSFAEHIGE MASSEN.**

(30) Priorität: **23.07.86 DE 3624844**

(43) Veröffentlichungstag der Anmeldung:
**24.05.89 Patentblatt 89/21**

(45) Bekanntmachung des Hinweises auf die
Patenterteilung:
**13.06.90 Patentblatt 90/24**

(84) Benannte Vertragsstaaten:
**BE DE FR GB IT SE**

(56) Entgegenhaltungen:
**DE-B-1 231 730**
**DE-C- 86 622**
**FR-A-1 331 710**
**FR-A-1 541 999**
**FR-A-1 548 442**
**US-A-1 737 347**

(73) Patentinhaber: **Schucker, Josef**
**Vogelsangstrasse 3**
**D-7530 Pforzheim (DE)**

(72) Erfinder: **Schucker, Josef**
**Vogelsangstrasse 3**
**D-7530 Pforzheim (DE)**

(74) Vertreter: **Wolf, Eckhard, Dr.-Ing.**
**Eugensplatz 5 Postfach 13 10 01**
**D-7000 Stuttgart 1 (DE)**

Courier Press, Leamington Spa, England.

## Beschreibung

Die Erfindung betrifft ein Temperiergerät für Fluide mit einem einen quaderförmigen Festkörper aufweisenden Wärmeübertragungskörper hoher Wärmeleitfähigkeit, dessen mindestens eine Breitseitenfläche mit Peltier-Elementen thermisch verbunden ist, und mit in dem Wärmeübertragungskörper angeordneten Bohrungen, die zu einem mäanderförmigen Strömungskanal mit einer Einlaßöffnung und einer Auslaßöffnung verbunden sind.

Bei einer Vorrichtung dieser Art, die zur Regulierung der Feuchte in einer Klimakammer bestimmt ist, ist es bekannt (FR—A—1 548 442), in einer Gaszuleitung für die Klimakammer und in einem Bypass je eine mit Strömungskanälen für ein Strömungsmedium versehene quaderförmige Festkörperkammer, deren eine Breitseitenfläche mit Peltier-Elementen bestückt ist, vorzusehen. Bei der bekannten Festkörperkammer handelt es sich um einen Flüssigkeitsabscheider, der mit wassergesättigter Luft als Strömungsmedium beaufschlagt wird. Der Strömungsweg ist dabei aus einem großräumigen Durchflußraum, einem Flüssigkeitssammelraum und einem zickzack-förmig verlaufenden Teil zusammengesetzt. Der Durchflußraum ist mit seiner Einlaßöffnung an eine Gasleitung angeschlossen und erstreckt sich senkrecht nach unten bis in den tiefer liegenden Flüssigkeitssammelbehälter, wobei der Flüssigkeitssammelbehälter mit einer Ablaßschraube für Kondenswasser versehen ist. Vom Flüssigkeitssammelbehälter aus wird das Gas über den zickzack-förmig verlaufenden Teil des Strömungswegs zur Auslaßöffnung geführt. Der zickzack-förmig verlaufende Teil ist in einem Metallblock eingefräst und liegt auf einer Metallplatte an der Kaltseite der Peltier-Elemente auf. Der Metallblock bildet gleichzeitig einen Teil der Begrenzungswand des Durchflußraums. Der restliche Teil der Begrenzungswand des Durchflußraums ist aus Kunststoff mit geringer Wärmeleitfähigkeit hergestellt. Auf der Warmseite der Peltier-Elemente sind Kühlfahnen aufgesetzt, die mittels eines Lüfters gekühlt werden. Der bekannte Durchflußkühler ist ausschließlich zur Abkühlung von Gasen, nicht jedoch von zähflüssigen Massen, wie Klebstoffe, Dichtstoffe und Lacke geeignet: Der großräumige Durchflußraum und die Flüssigkeitskammer werden nämlich sehr viel langsamer durchströmt als der zickzack-förmig verlaufende Teil des Strömungswegs. In den großräumigen Teilen tritt keine ausreichende Durchmischung des Massenstroms auf. Da der Massenstrom in den großräumigen Bereichen nur auf der einen Seite über eine metallische Zwischenwand gekühlt wird, auf der anderen Seite an der aus Kunststoff bestehenden Begrenzungswand jedoch kein Wärmeaustausch stattfindet, würde bei einer zähflüssigen Masse ein großes Temperaturgefälle quer zur Strömungsrichtung entstehen, mit der Folge eines entsprechenden Viskositätsabfalls quer zur Strömungrichtung, was zwangsläufig zu einem ausgeprägten Strömungsprofil innerhalb der betreffenden Kanalteile und zu einer Verstopfung führen würde. Hinzu kommt, daß bei dem bekannten Feuchtigkeitsabscheider die Peltier-Elemente ausschließlich als Kühlaggregate eingesetzt werden.

Der Erfindung liegt die Aufgabe zugrunde, ein Temperiergerät der eingangs angegebenen Art zu entwickeln, das zur Temperierung von zähflüssigen Massen geeignet ist und vor allem in Lackier- und Kleberobotern eingesetzt werden kann.

Zur Lösung dieser Aufgabe wird die im Patentanspruch 1 angegebene Merkmalskombination vorgeschlagen. Weitere vorteilhafte Ausgestaltungen und Weiterbildungen der Erfindung ergeben sich aus den abhängigen Ansprüchen.

Bei einer Beaufschlagung des Temperiergeräts mit zähflüssigen Massen, wie Klebstoffe, Dichtstoffe und Lacke als Fluid sorgt die Umlenkung im mäanderförmigen Strömungskanal für eine intensive Durchmischung und damit einen Temperaturausgleich im Massenstrom. Mit den erfindungsgemäßen Peltier-Elementen steht ein kombiniertes Heiz- und Kühlaggregat zur Verfügung, mit dem bei Bedarf eine Temperaturanhebung und -absenkung möglich ist. Um unmittelbar oder mittelbar auf die das Strömungs- und Sprühverhalten des austretenden Massenstroms maßgebliche Viskosität Einfluß nehmen zu können, ist gemäß der Erfindung ein Sensor zur Messung der Viskosität des aus dem Temperiergerät austretenden Massenstroms oder einer die Viskosität beeinflussenden oder von dieser abhängigen Größe sowie ein mit den betreffenden Meßwert beaufschlagter Regler zur Ansteuerung der Peltier-Elemente nach Maßgabe der Abweichung von einem vorgegebenen Sollwert vorgesehen.

Gemäß einer bevorzugten Ausgestaltung der Erfindung ist zur indirekten Viskositätsmessung ein die Temperatur in der Nähe der Auslaßöffnung des Strömungskanals messender Temperaturfühler sowie ein mit dem Temperaturmeßwert beaufschlagter Regler zur Ansteuerung der Peltier-Elemente nach Maßgabe der Abweichung von einem vorgegebenen Temperatur-Sollwert vorgesehen.

Da das Temperiergerät vor allem in Verbindung mit Lackier- und Kleberobotern eingesetzt wird, durch welche Lacke bzw. Klebstoffe mit Hilfe geeigneter Spritz- oder Sprühdüsen auf eine Werkstückoberfläche aufgetragen werden, hat es sich als besonders zweckmäßig erwiesen, die Viskosität der aufgespritzten Masse durch Überwachung des erzeugten Spritzbildes zu kontrollieren. Wie bei Klebstoffen verändert sich auch bei Lacken bereits bei geringen Temperaturabweichungen vom Sollwert die Viskosität recht stark und beeinträchtigt bei nicht optimaler Einstellung die Spritzfähigkeit der Masse und damit das Spritzbild. Dies äußert sich beispielsweise in einer Veränderung der Sprühweite und der Sprühdicke oder in einem Aufreißen des Materials. Gemäß einer bevorzugten Ausgestaltung der Erfindung wird daher in der Nähe der Spritz- oder Sprühdüse ein Sensor oder ein Bilderkennungsgerät zur Ausmessung des Spritzbilds der auf das Werkstück aufgetragenen Masse angeordnet. Weiter ist ein mit den Meßparametern des Spritzbilds beaufschlagbarer Regler zur Ansteuerung der Peltier-Elemente nach Maßgabe der Abweichung von vorgegebenen Soll-Parametern vorgesehen. Als Meß-Parameter des Spritzbilds können beispielsweise die Sprühstrahlbreite oder die Sprühstrahldicke verwendet werden.

Gemäß einer weiteren bevorzugten Ausgestaltung der Erfindung ist der Wärmeübertragungskörper als Metallblock, z.B. aus Aluminium oder Kupfer in der Gestalt eines flachen Quaders ausgebildet, dessen Breitseitenflächen mit je einem aus Peltier-Elementen bestehenden kombinierten Heiz- und Kühlaggregat belegt sind und in welchem die den Strömungskanal bildenden Bohrungen in einer zu den Breitseitenflächen parallelen Ebene angeordnet sind. Zweckmäßig sind die Bohrungen über verschließbare Öffnungen von außen her zugänglich, so daß eine einfache Reinigung der Bohrungen möglich ist.

Zur Verbesserung der Durchmischung des Massenstroms im Strömungskanal zum Zwecke des besseren Temperaturausgleichs können in den Strömungskanal schraubenförmig gewundene Leitflächen mit abwechselnd rechtsläufigen und linksläufigen, an den Übergangsstellen gegeneinander in Umfangsrichtung versetzten Abschnitten angeordnet werden, die den Strömungskanal in zwei, an den Übergangsstellen jeweils paarweise hälftig ineinander einmündende Teilkanäle unterteilen. Diese Leitflächen können über die verschließbaren Öffnungen zu Wartungs- und Reinigungszwecken leicht ausgetauscht werden.

Das erfindungsgemäße Temperiergerät wiegt bei Verwendun eines Aluminiumquaders als Wärmeübertragungskörper weniger als 20 Kilogramm und kann daher unmittelbar an einem Roboterarm angeordnet werden.

Im folgenden wird die Erfindung anhand der in der Zeichnung schematisch dargestellten Ausführungsbeispiele näher erläutert. Es zeigen:

Fig. 1 eine Ansicht einer Roboteranordnung für den Klebstoffauftrag auf Werkstückoberflächen;

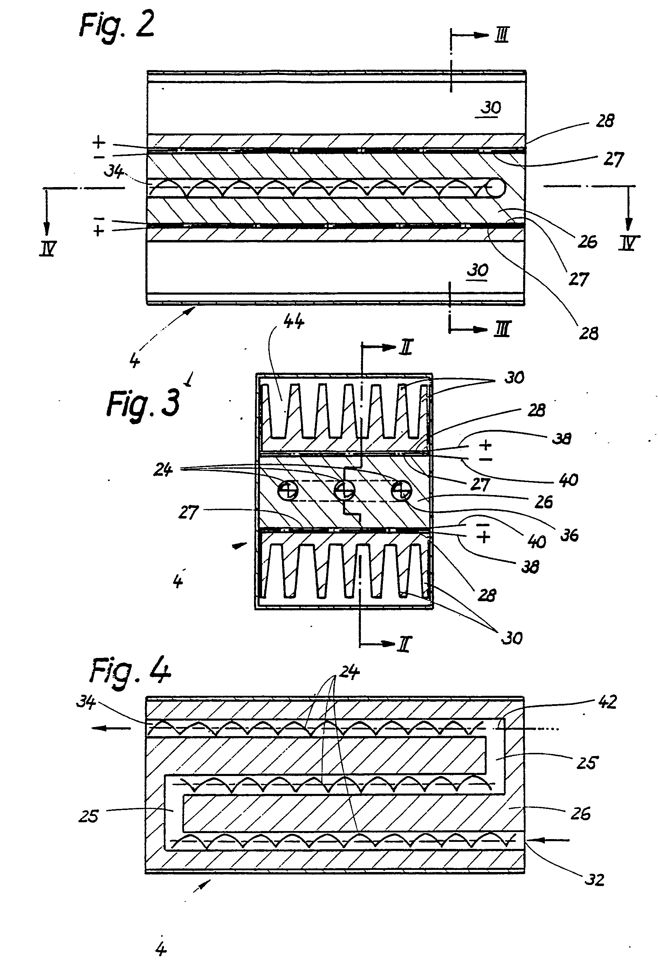

Fig. 2 einen senkrechten Schnitt durch das Temperiergerät der Roboteranordnung nach Fig. 1;

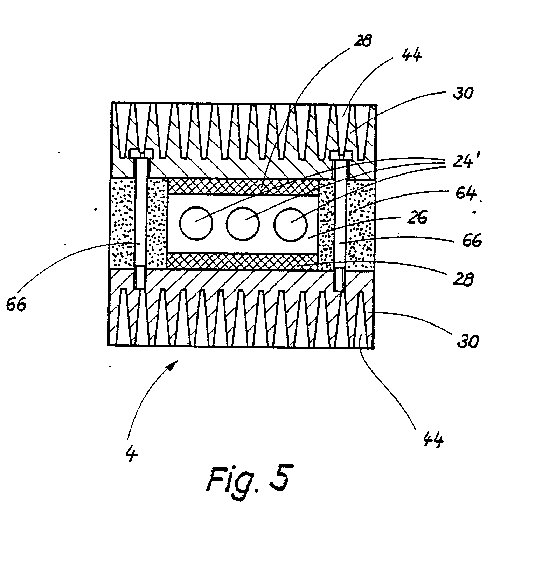

Fig. 3 einen Schnitt entlang der Schnittlinie III—III der Fig. 2;

Fig. 4 einen Schnitt entlang der Schnittlinie IV—IV der Fig. 2;

Fig. 5 und 6 ein abgewandeltes eines Temperiergeräts in Schnittdarstellungen entsprechend Fig. 3 und 4;

Fig. 7 ein Blockschaltbild eines Regelkreises für das Temperiergerät.

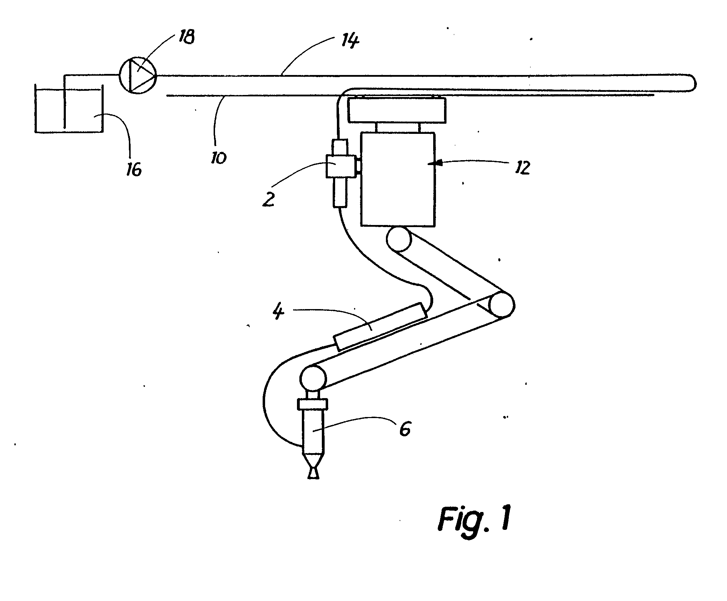

Die Roboteranordnung nach Fig. 1 weist einen an einer Tragschiene' 10 hängend verfahrbaren Industrieroboter 12 auf, der über eine Energiezufuhrkette mit Elektro-Pneumatik- und Klebstoffleitungen 14 verbunden ist. Der Klebstoff wird aus einem Vorratsbehälter 16 mit Hilfe einer Förderpumpe 18 durch die Klebstoffhochdruckleitung 14 unter einem Druck von ca. 250 bar zu den am Roboter 12 angeordneten Aggregaten 2, 4, 6 gefördert. Dort gelangt der Klebstoff zunächst in einen Konstantdruckerzeuger 2 und von dort über ein Klebstofftemperiergerät 4 in eine steuerbare Klebstoffpistole 6. Während die von der stationären Förderpumpe 18 zum Roboter geführte Hochdruckleitung 14 etwa 10 bis 15 m lang ist, beträgt die Entfernung zwischen den auf dem Roboter angeordneten Aggregaten insgesamt nur etwa 1 m. Die Anordnung des Klebstofftemperiergeräts 4 unmittelbar auf dem Roboter 12 ist nur durch die im folgenden beschriebene leichte Bauweise möglich.

Das Temperiergerät 4 besteht im wesentlichen aus einem mit Längsbohrungen 24 versehenen quaderförmigen Metallblock 26 aus Aluminium sowie an den Breitseitenflächen 27 des Metallblocks 26 angeordneten Peltierelementen 28, die auf ihrer dem Metallblock 26 gegenüberliegenden Wärmeübertragungsfläche mit Wärmeleitrippen 30 bestückt sind. Die Längsbohrungen 24 befinden sich in einer zu den Breitseitenflächen 27 parallelen Ebene innerhalb des Metallblocks 26. Sie sind durch Querbohrungen 25 zu einem mäanderförmigen Strömungskanal miteinander verbunden, der an der einen Stirnseite des Metallblocks 26 eine mit dem Konstantdruckerzeuger 2 verbundene Einlaßöffnung 32 und an der anderen Stirnseite eine zur Klebstoffpistole 6 führende ! Auslaßöffnung 34 aufweist. Innerhalb des Kanals 24, 25 befinden sich statische Mischer 26 in Form von Leitblechen oder -rippen, die eine Durchmischung des strömenden Klebstoffs und damit ' einen Temperaturausgleich innerhalb des Klebstoffs bewirken.

Die Peltierelemente 28 können je nach Polung ihrer Anschlüsse 38, 40 zur Kühlung oder zur Heizung des Metallblocks 26 eingesetzt werden. Weiter ist ein in der Zeichnung nicht dargestellter Regler vorgesehen, der mit dem von einem Kanal 24, 25 eingreifenden Temperaturfühler 42 erfaßten Temperaturmeßwert beaufschlagt wird und die Peltierelemente 28 nach Maßgabe der Abweichung des Temperaturmeßwerts von einem abgegebenen Temperatursollwert ansteuert.

Die Wärmeleitrippen 30 der Peltierelemente 28 werden durch einen strömenden Wärmeträger zwangsbeaufschlagt. Sie befinden sich zu diesem Zweck beispielsweise in einem Luftkanal 44, der durch ein nicht dargestelltes Gebläse mit Luft als Wärmeträger beaufschlagt ist.

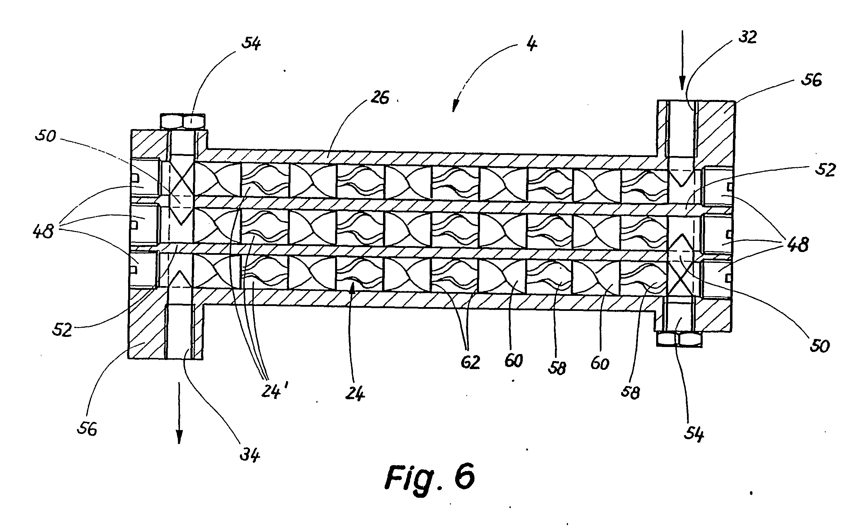

Bei dem bevorzugten Ausführungsbeispiel des Temperiergeräts nach den Fig. 5 und 6 weist der quaderförmige Metallblock 26 drei Längsbohrungen 24' auf, die an ihren Enden durch Schraubverschlüsse 48 von außen her zugänglich sind. Die Enden der Bohrungen sind von den Längsseiten her so angebohrt, daß die eine Trennwand unter Bildung einer Querverbindung 50 zwischen den beiden benachbarten Bohrungen 24' durchgetrennt wird, während die andere Trennwand 52 erhalten bleibt. Die Verbindungsbohrungen 50 sind durch je einen Schraubstopfen 54 verschlossen, während auf der gegenüberliegenden Seite Stutzen 56 mit den Ein- und Auslässen 32 und 34 angeordnet sind.

Um ein größeres Volumen zu erhalten, können auch mehr — beispielsweise sieben — Längsbohrungen 24' eingebracht werden. In diesem Falle werden durchgehende Verbindungsbohrungen 50 eingebracht, die alle Längsbohrungen 24' anschneiden, während die Trennwände 52 durch in die Verbindungsbohrungen eingesetzte Trennbolzen (nicht dargestellt) gebildet werden.

Die in den Längsbohrungen 24' befindlichen Leitflächen 36 weisen schraubenförmig gewundene Abschnitte 58, 60 auf, die abwechselnd rechtsläufig und linksläufig sind und an den Übergangsstellen 62 gegeneinander in Umfangsrichtung versetzt angeordnet sind. Die Leitflächen 36 unterteilen die Klebstoffbohrungen 24' in zwei, an den Übergangsstellen 62 jeweils paarweise hälftig ineinander einmündende Teilkanäle und sorgen so für eine intensive Durchmischung des strömenden Klebstoffs, so daß trotz der schlechten Wärmeleitfähigkeit des Klebstoffmaterials eine konstante Temperatur über den Querschnitt des von außen her durch die Peltierelement beheizten oder gekühlten Klebstoffkanals erhalten wird.

Die berippten Aluminium-Körper 30 sind mittels Spannschrauben 66 unter Zwischenklemmen der Peltierelemente 28 am Metallblock 26 lösbar festgeklemmt. Eine Wärmeleitungspaste an den Wärmeübergangsflächen zwischen Metallblock und Peltierelement bzw. Peltierelement und Kühlkörper sorgt für einen guten Wärmekontakt. An den nicht mit Peltierelementen belegten Schmalseitenflächen des Metallblocks 26 sind aus Polyurethanschaum bestehende Wärmeisolierungen 64 angeordnet.

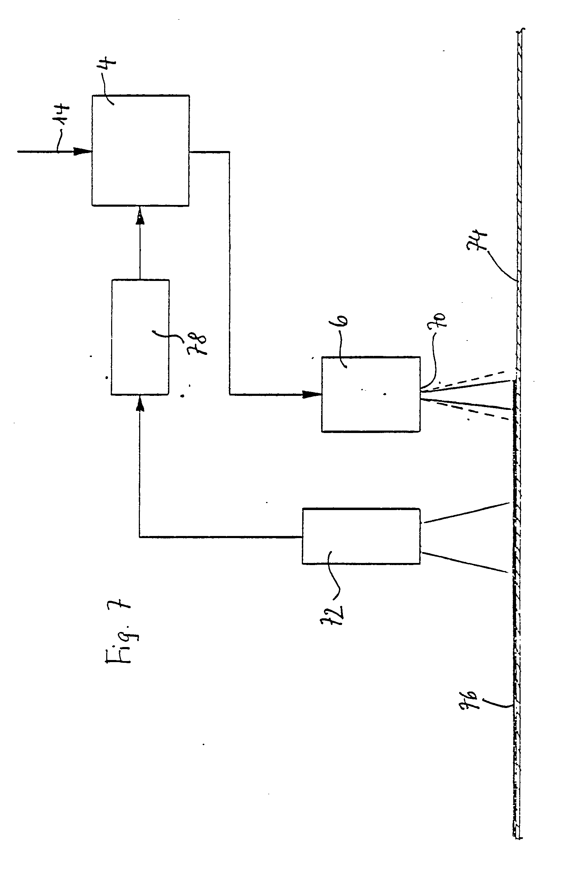

Der in Fig. 7 in einem Blockschaltbild schematisch dargestellte Regelkreis enthält neben dem Temperiergerät 4 und der mit einer Spritzdüse 70 ausgestatteten Spritzpistole 6 einen CCD-Bildsensor 72 (CCD = charge-coupled device), mit dem das Spritzbild der von der Spritzpistole 6 auf eine Werkstückoberfläche 74 aufgetragenen Masse 76 erfaßt und ausgemessen wird. Als Meßparameter kommen beispielsweise die Sprühbreite oder die Sprühdicke in Betracht, die ein Maß für die Viskosität der aufgetragenen Masse 76 sind. Verändert sich das Bild aufgrund von Viskositätsänderungen, die beispielsweise aufgrund von Toleranzen in der Zusammensetzung oder auf unterschiedliche Ausgangsstoffe zurückzuführen sind, so regelt das Bilderfassungsgerät 72 und der dazwischen geschaltete, beispielsweise in der Robotersteuerung integrierte Regler 78 über ein analoges Ausgangssignal die Ansteuerung der Peltierelemente im Temperiergerät 4. Die Temperiersteuerung wird also automatisch nachgeregelt, um ein gleichbleibendes Spritzergebnis zu erhalten.

**Patentansprüche**

1. Temperiergerät für Fluide mit einem einen quaderförmigen Festkörper (26) aufweisenden Wärmeübertragungskörper hoher Wärmeleitfähigkeit, dessen mindestens eine Breitseitenfläche mit Peltier-Elementen (28) thermisch verbunden ist, und mit in dem Wärmeübertragungskörper angeordneten Bohrungen, die zu einem mäanderförmigen Strömungskanal (24, 25) mit einer Einlaßöffnung (32) und einer Auslaßöffnung (34) verbunden sind, dadurch gekennzeichnet, daß der Strömungskanal mit zähflüssigen Massen, wie Klebstoffe, Dichtstoffe und Lacke als Fluid beaufschlagbar ist, daß die Peltier-Elemente (28) als kombiniertes Heiz- und Kühlaggregat ausgebildet sind, und daß ein Sensor zur Messung der Viskosität des aus dem Temperiergerät austretenden Massenstroms oder einer die Viskosität beeinflussenden oder von dieser abhängigen Größe sowie ein mit dem betreffenden Meßwert beaufschlagter Regler zur Ansteuerung der Peltier-Elemente (28) nach Maßgabe der Abweichung von einem vorgegebenen Sollwert vorgesehen sind.

2. Temperiergerät nach Anspruch 1, dadurch gekennzeichnet, daß ein die Temperatur in der Nähe der Auslaßöffnung (34) des Strömungskanals (24, 25) messender Temperaturfühler (42) sowie ein mit dem Temperaturmeßwert beaufschlagter Regler zur Ansteuerung der Peltier-Elemente (28) nach Maßgabe der Abweichung von einem vorgegebenen Temperatur-Sollwert vorgesehen sind.

3. Temperiergerät nach Anspruch 1, dadurch gekennzeichnet, daß der aus der Auslaßöffnung austretende Massenstrom über eine Spritz- oder Sprühdüse auf eine Werkstückoberfläche auftragbar ist, daß in der Nähe der Spritz- oder Sprühdüse ein Sensor oder ein Bilderkennungsgerät zur Ausmessung des Spritzbilds der auf das Werkstück aufgetragenen Masse angeordnet ist, und daß ein mit den Meßparametern des Spritzbilds beaufschlagbarer Regler zur Ansteuerung der Peltier-Elemente (28) nach Maßgabe der Abweichung von vorgegebenen Bildparametern vorgesehen ist.

4. Temperiergerät nach Anspruch 3, dadurch gekennzeichnet, daß die Sprühstrahlbreite oder -dicke als Meß- bzw. Bildparameter verwendet wird.

5. Temperiergerät nach Anspruch 3 oder 4, dadurch gekennzeichnet, daß das Bilderkennungsgerät einen CCD-Bildsensor sowie eine Schaltung zur Auswertung des CCD-Bildes aufweist.

6. Temperiergerät nach einem der Ansprüche 1 bis 5, dadurch gekennzeichnet, daß in dem Strömungskanal (24, 25) schraubenförmig gewundene Leitflächen (36) mit abwechselnd rechtsläufigen und linksläufigen, an den Übergangsstellen gegeneinander in Umfangsrichtung versetzten Abschnitten angeordnet sind, die den Strömungskanal in zwei, an den Übergangsstellen jeweils paarweise hälftig ineinander einmündende Teilkanäle unterteilen.

7. Temperiergerät nach einem der Ansprüche 1 bis 6, dadurch gekennzeichnet, daß die einzelnen Bohrungen (24) des Strömungskanals über verschließbare Öffnungen (48) von außen her zugänglich sind.

8. Temperiergerät nach einem der Ansprüche 1 bis 7, dadurch gekennzeichnet, daß die Bohrungen (24') im Bereich ihrer stirnseitigen Enden durch Verbindungsbohrungen (50) und Zwischenwände (52) unter Bildung des mäanderförmigen Strömungskanals paarweise miteinander verbunden sind.

9. Temperiergerät nach Anspruch 8, dadurch gekennzeichnet, daß die Verbindungsbohrungen (50) an den beiden Stirnseiten alle Kanalbohrungen (24') anschneiden und daß die Zwischenwände (52) durch in die Verbindungsbohrungen (50) eingesetzte Trennbolzen gebildet sind.

10. Temperiergerät nach einem der Ansprüche 6 bis 9, dadurch gekennzeichnet, daß die Leitflächen aus einem abschnittsweise rechts- und linksläufig gewundenen Metallblech oder Kunststoffspritzteil bestehen.

11. Temperiergerät nach einem der Ansprüche 6 bis 10, dadurch gekennzeichnet, daß die Leitflächen (36) eine von der zähflüssigen Masse nicht benetzbare Oberfläche aufweisen.

12. Temperiergerät nach einem der Ansprüche 1 bis 11, dadurch gekennzeichnet, daß der Wärmeübertragungskörper als Metallblock (26) vorzugsweise aus Aluminium oder Kupfer ausgebildet ist.

13. Temperiergerät nach Anspruch 12, dadurch gekennzeichnet, daß der Wärmeübertragungskörper (26) die Gestalt eines flachen Quaders aufweist, dessen Breitseitenflächen (27) mit je einem aus Peltier-Elementen (28) bestehenden kombinierten Heiz- und Kühlaggregat belegt sind und in welchem die den Strömungskanal bildenden Bohrungen (24, 25) in einer zu den Breitseitenflächen (27) parallelen Ebene angeordnet sind.

14. Temperiergerät nach Anspruch 13, dadurch gekennzeichnet, daß die Einlaßöffnung (32) und die Auslaßöffnung (24) an einander gegenüberliegenden Schmalseitenwänden des Wärmeübertragungskörpers (26) angeordnet sind.

15. Temperiergerät nach einem der Ansprüche 1 bis 14, dadurch gekennzeichnet, daß die Peltier-Elemente (28) an ihrer dem Wärmeübertragungskörper (26) gegenüberliegenden Wärmeübertragungsfläche mit Wärmeleitrippen (30) versehen sind.

16. Temperiergerät nach einem der Ansprüche 1 bis 15, dadurch gekennzeichnet, daß die Peltier-Elemente (28) an ihrer dem Wärmeübertragungskörper (26) gegenüberliegenden Wärmeübertragungsfläche (30) durch einen gasförmigen oder flüssigen Wärmeträger zwangsbeaufschlagt sind.

17. Temperiergerät nach Anspruch 16, dadurch gekennzeichnet, daß die den Wärmeübertragungskörper (26) gegenüberliegenden Wärmeübertragungsflächen (30) der Peltier-Elemente (28) in einem Luftkanal (44) mit Gebläse angeordnet sind.

18. Temperiergerät nach einem der Ansprüche 1 bis 17, dadurch gekennzeichnet, daß zumindest ein Teil der Peltierelement-freien Stirnseitenflächen des Wärmeübertragungskörpers nach außen hin durch ein wärmeisolierendes Material, vorzugsweise aus Polyurethan-Schaum thermisch isoliert ist.

**Revendications**

1. Appareil d'équilibrage de la température de fluides, avec un corps thermoconducteur d'une grande conductibilité thermique comprenant un corps solide (26) de forme parallélépipédique dont au moins l'un des côtés larges est relié thermiquement à des éléments Peltier (28), et avec des alésages disposés dans le corps thermoconducteur et réunis en un canal d'écoulement (24, 25) en forme de méandres avec un orifice d'entrée (32) et un orifice de sortie (34), caractérisé en ce que le canal d'écoulement peut être alimenté en masses visqueuses telles que des colles, des matériaux d'étanchéité et des peintures en tant que fluide, que les éléments Peltier (28) sont conformés en groupe de chauffage et de refroidissement combiné, et qu'il est prévu un détecteur pour la mesure de la viscosité du flux massique sortant de l'appareil d'équilibrage de température ou d'une grandeur agissant sur la viscosité ou dépendant de celle-ci, ainsi qu'un régulateur recevant la valeur de mesure correspondante et destiné à commander les éléments Peltier (28) en fonction de l'écart par rapport à une valeur de consigne prédéterminée.

2. Appareil d'équilibrage de température selon la revendication 1, caractérisé en ce qu'il comprend une sonde de température (42) mesurant la température au voisinage de l'orifice de sortie (34) du canal d'écoulement (24, 25) ainsi qu'un régulateur recevant la valeur de température mesurée et destiné à commander les éléments Peltier (28) en fonction de l'écart par rapport à une valeur de température de consigne prédéterminée.

3. Appareil d'équilibrage de température selon la revendication 1, caractérisé en ce que le flux massique sortant de l'orifice de sortie peut être appliqué par l'intermédiaire d'un pulvérisateur ou d'une buse sur une surface d'une pièce à traiter, qu'au voisinage du pulvérisateur ou de la buse est disposé un détecteur ou un analyseur d'images pour la mesure de l'image de pulvérisation de la masse appliquée sur la pièce à traiter, et qu'il est prévu un régulateur pouvant recevoir les paramètres de mesure de l'image de pulvérisation et destiné à commander les éléments Peltier (28) en fonction de l'écart par rapport à des paramètres d'image prédéterminés.

4. Appareil d'équilibrage de température selon la revendication 3, caractérisé en ce que la largeur ou l'épaisseur du jet de pulvérisation est utilisée comme paramètre de mesure et respectivement d'image.

5. Appareil d'équilibrage de température selon l'une des revendications 3 ou 4, caractérisé en ce que l'analyseur d'images comprend un capteur vidéo CCD ainsi qu'un circuit pour l'interprétation de l'image CCD.

6. Appareil d'équilibrage de température selon l'une des revendications 1 à 5, caractérisé en ce que des surfaces de guidage (36) conformées en spirale avec des sections tournant alternativement à droite et à gauche et décalées les unes par rapport aux autres dans le sens périphérique aux points de jonction sont disposées dans le canal d'écoulement (24, 25) et subdivisent ledit canal d'écoulement en deux canaux partiels lesquels débouchent respectivement par paire et par moitié l'un dans l'autre aux points de jonction.

7. Appareil d'équilibrage de température selon l'une des revendications 1 à 6, caractérisé en ce que les différents alésages (24) du canal d'écoulement sont accessibles par l'extérieur par l'intermédiaire d'ouvertures (48) obturables.

8. Appareil d'équilibrage de température selon l'une des revendications 1 à 7, caractérisé en ce que les alésages (24') sont reliés entre eux par paires, dans la région de leurs extrémités du côté frontal, par des alésages de communication (50) et des cloisons (52), avec formation du canal d'écoulement en forme de méandres.

9. Appareil d'équilibrage de température selon la revendications 8, caractérisé en ce que les alésages de communication (50) aux deux faces frontales entament tous les alésages de canal (24'), et que les cloisons (52) sont constituées par des boulons de séparation introduits dans les alésages de communication (50).

10. Appareil d'équilibrage de température selon l'une des revendications 6 à 9, caractérisé en ce que les surfaces de guidage sont réalisées sous la forme d'une tôle métallique ou d'une pièce de matière plastique moulée par injection avec des sections tournant alternativement à droite et à gauche.

11. Appareil d'équilibrage de température selon l'une des revendications 6 à 10, caractérisé en ce que les surfaces de guidage (36) présentent une surface non mouillable par la masse visqueuse.

12. Appareil d'équilibrage de température selon l'une des revendications 1 à 11, caractérisé en ce que le corps thermoconducteur est conformé en bloc de métal (26), de préférence en aluminium ou en cuivre.

13. Appareil d'équilibrage de température selon la revendication 12, caractérisé en ce que le corps thermoconducteur (26) présente la forme d'un parallélépipède plat dont les côtés larges (27) sont respectivement recouverts d'un groupe de chauffage et de refroidissement combiné composé d'éléments Peltier (28) et dans lequel les alésages (24, 25) formant le canal d'écoulement sont disposés dans un plan parallèle aux côtés larges (27).

14. Appareil d'équilibrage de température selon la revendication 13, caractérisé en ce que l'orifice d'entrée (32) et l'orifice de sortie (34) sont disposés sur des côtés étroits opposés du corps thermoconducteur (26).

15. Appareil d'équilibrage de température selon l'une des revendications 1 à 14, caractérisé en ce que les éléments Peltier (28) sont munis à leur surface thermoconductrice opposée au corps thermoconducteur (26) d'ailettes conductrices de chaleur (30).

16. Appareil d'équilibrage de température selon l'une des revendications 1 à 15, caractérisé en ce que les éléments Peltier (28) sont exposés à leur surface thermoconductrice (30) opposée au corps thermoconducteur (26) à une circulation forcée d'un caloporteur gazeux ou liquide.

17. Appareil d'équilibrage de température selon la revendication 16, caractérisé en ce que les surfaces thermoconductrices (30) des éléments Peltier (28) opposées au corps thermoconducteur (26) sont disposées dans un conduit d'air (44) avec ventilateur.

18. Appareil d'équilibrage de température selon l'une des revendications 1 à 17, caractérisé en ce qu'au moins une partie des faces frontales du corps thermoconducteur dépourvues d'éléments Peltier sont thermiquement isolées vers l'extérieur par un isolant thermique constitué, de préférence, de mousse de polyuréthane.

## Claims

1. Apparatus for tempering fluids comprising a heat-transfer body of high heat conductivity including a square-shaped solid body (26), with at least one broadside surface of the heat-transfer body being thermally linked with peltier elements (28), and with bores in the heat-transfer body, which bores are connected with a maeander-shaped flow channel (24, 25) including an inlet opening (32) and an outlet opening (34), characterised in that the flow channel is admissable with viscous masses such as adhesives, sealants and lacquers as a fluid; that the peltier elements (28) are constructed to be combined heating and cooling units; and that a sensor is provided for measuring the viscosity of the mass flow departing the tempering device or a value effecting the viscosity or being dependent on it, as well as a controller supplied with the respective measured value for loading the peltier elements (28) relative to the deviation from a preset nominal value.

2. Apparatus for tempering fluids according to claim 1, characterised in that provision is made for a temperature sensor (42) which measures the temperature in the vicinity of the outlet opening (34) of the flow channel (24, 25), as well as a controller, supplied with the measured temperature value for loading the peltier elements (28) relative to the deviation from a preset temperature nominal value.

3. Apparatus for tempering fluids according to claim 1, characterised in that the mass flow departing through the outlet opening is appliable through a spray jet onto a workpiece surface; that near the spray jet a sensor or image-sensing device is provided for measuring the spray pattern of the mass applied onto the workpiece; and that provision is made for a controller, supplied with the measured parameters of the spray pattern for controlling the peltier elements (28) relative to' the deviation of preset image parameters.

4. Apparatus for tempering fluids according to claim 3, characterised in that the spray jet breadth or -thickness is utilised as measuring or image paramater respectively.

5. Apparatus for tempering fluids according to claim 3 or 4, characterised in that the image-sensing device includes a CCD image sensor as well as a circuit for evaluation of the CCD image.

6. Apparatus for tempering fluids according to one of the claims 1 to 5, characterised in that the flow channel (24, 25) includes screw-shaped guide surfaces (36) with alternately right- and left-orientated sections, at the change-over sections offset from each other in the peripheral direction, which divide the flow channel into two channel sections which enter in pairs and halfway into the change-over sections.

7. Apparatus for tempering fluids according to one of the claims 1 to 6, characterised in that the individual bores (24) of the flow channel are accessible from the outside through sealable openings (48).

8. Apparatus for tempering fluids according to one of the claims 1 to 7, characterised in that the bores (24') are connected in pairs with each other in the area of the face-sided ends by connecting bores (50) and intermediate walls (52), thus forming the maeander-shaped flow channel.

9. Apparatus for tempering fluids according to claim 8, characterised in that the connecting bores (50) at the two face sides cut all channel bores (24'), and that the intermediate walls (52) are formed by separating bolts inserted into the connecting bores (50).

10. Apparatus for tempering fluids according to one of the claims 6 to 9, characterised in that the guide surfaces consist of a sectionally right-hand- and left-hand-wound metal sheet or spray-formed plastics material part.

11. Apparatus for tempering fluids according to one of the claims 6 to l0, characterised in that the guide surfaces (36) have a surface which is not moistened by the viscous mass.

12. Apparatus for tempering fluids according to one of the claims 1 to 11, characterised in that the heat-transfer body is a metal block (26), preferably of aluminium of copper.

13. Apparatus for tempering fluids according to claim 12, characterised in that the heat-transfer body (26) has the shape of a flat square the broadside surfaces (27) of which are each equipped with a combined heating and cooling unit consisting of peltier elements (28) and wherein the bores (24, 25) forming the flow channel are disposed in a plane parallel with the broadside surfaces (27).

14. Apparatus for tempering fluids according to claim 13, characterised in that the inlet opening (32) and the outlet opening (24) are disposed in opposing narrow-side walls of the heat-transfer body (26).

15. Apparatus for tempering fluids according to one of the claims 1 to 14, characterised in that the peltier elements (28) are provided with heat-conducting ribs (30) at their heat-transfer surface opposite the heat-transfer body (26).

16. Apparatus for tempering fluids according to one of the claims 1 to 15, characterised in that the peltier elements (28) are forceably loaded by a gasous or liquid heat carrier at their heat-transfer surface (30) opposite the heat-transfer body (26).

17. Apparatus for tempering fluids according to claim 16, characterised in that the heat-transfer surfaces (30) of the peltier elements (28) opposite the heat-transfer body (26) are disposed in an air channel (44) including a blower.

18. Apparatus for tempering fluids according to one of the claims 1 to 17, characterised in that at least one part of the peltier-element free faceside surfaces of the heat-transfer body are thermally insulated toward the outside by a heat-insulating material, preferably of polyurethane foam.

Fig. 1

Fig. 2

Fig. 3

Fig. 4

Fig. 5

EP 0 316 315 B1

Fig. 6

Fig. 7